# EUROPÄISCHE PATENTSCHRIFT

(11) **EP 3 734 486 B1**
(45) Veröffentlichungstag und Bekanntmachung des Hinweises auf die Patenterteilung: **01.05.2024**
(21) Anmeldenummer: 19172578.7
(22) Anmeldetag: 03.05.2019
(51) Int. Cl.: G06F 21/62

(54) **COMPUTERIMPLEMENTIERTES VERFAHREN ZUM ERSETZEN EINES DATENSTRINGS**
COMPUTER IMPLEMENTED METHOD FOR REPLACING A DATA STRING
PROCÉDÉ EXÉCUTÉ PAR ORDINATEUR PERMETTANT DE REMPLACER UNE CHAÎNE DE DONNÉES

(43) Veröffentlichungstag der Anmeldung: 04.11.2020
(73) Patentinhaber: Comforte AG, 65189 Wiesbaden (DE)
(72) Erfinder: Horst, Michael, 16816 Wuthenow (DE); Horst, Henning, 86874 Zaisertshofen (DE)
(74) Vertreter: WSL Patentanwälte Partnerschaft mbB

(56) Entgegenhaltungen:
- EP-A1- 2 735 991
- US-A1- 2014 108 813
- US-A1- 2018 062 832

## Beschreibung

Die vorliegende Erfindung betrifft ein computerimplementiertes Verfahren zum Ersetzen eines sicherheitsrelevanten, unverschlüsselten Datenstrings durch einen Platzhalter. Dabei umfasst das Verfahren die Schritte Bereitstellen einer Mehrzahl von voneinander verschiedenen Ersetzungstabellen, wobei in jeder aus der Mehrzahl von Ersetzungstabellen für jedes Zeichen des Alphabets genau ein Ersetzungszeichen aus dem gleichen Alphabet angegeben ist und wobei die Ersetzungszeichen in jeder aus der Mehrzahl von Ersetzungstabellen alle voneinander verschieden sind, Empfangen des sicherheitsrelevanten, unverschlüsselten Datenstrings, wobei der Datenstring aus einer Mehrzahl von Zeichen eines Alphabets gebildet ist, und Erzeugen des den unverschlüsselten Datenstring ersetzenden Platzhalters und Ausgeben des Platzhalters.

Verfahren zum Ersetzen eines sicherheitsrelevanten, unverschlüsselten Datenstrings durch einen Platzhalter sind aus dem Stand der Technik in mannigfaltiger Weise bekannt. So ist es beispielsweise bekannt, eine Mehrzahl von voneinander verschiedenen Ersetzungstabellen bereitzuhalten, wobei für die konkrete Ersetzung eine Untermenge aus der Mehrzahl von Ersetzungstabellen, beispielsweise auf Grundlage eines Schlüssels, ausgewählt wird, und der unverschlüsselte Datenstring anhand der ausgewählten Untermenge von Ersetzungstabellen durch den Platzhalter ersetzt wird. Jede Ersetzungstabelle enthält dabei eine Zuordnung eines jeden Zeichens des Alphabets, dem die Zeichen des unverschlüsselten Datenstrings entnommen sind, zu einem Zeichen eines Alphabets des Platzhalters.

Ein derartiges Verfahren kann in einem Szenario der Datenverarbeitung zum Einsatz kommen, bei welchem der sicherheitsrelevante Datenstring in einem Datensatz durch einen Token als Platzhalter ersetzt wird, bevor der Datensatz pseudonymisiert weiterverarbeitet wird. Als Beispiel für ein solches Szenario kann eine Architektur für die Abwicklung des bargeldlosen Zahlungsverkehrs dienen, bei der ein Zahlungsverkehrsabwickler über ein Datennetz eine Vielzahl von Verkaufsstellen sowie Geldautomaten auf der einen Seite und eine Vielzahl von Kartenanbietern sowie eine Vielzahl von Zahlungsausgleichssystemen auf der anderen Seite mit einem zentralen Server verbindet, wobei der Server die einzelnen Transaktionen verwaltet und steuert.

Als Herausforderung erweist sich dabei, dass Datensätze, welche vertrauenswürdige Datenstrings, insbesondere Personen identifizierende Ziffernfolgen wie beispielsweise Karten- oder Kontonummern, enthalten, nicht nur übertragen, sondern auch verarbeitet und gespeichert werden müssen. Derartige Karten oder- Kontonummern werden in dieser Anmeldung auch als PANs (Englisch: Primary Account Numbers) abgekürzt. Dabei müssen die gespeicherten und auf dem Server in der Verarbeitung befindlichen Datensätze vor dem Zugriff und dem Einblick Dritter auf die darin enthaltenen PANs geschützt werden, um einen Missbrauch des Zahlungsverkehrssystems zu verhindern.

Zur Verarbeitung und Speicherung von Datensätzen, welche PANs enthalten, wurden Verfahren und Systeme zur Tokenisierung der im Klartext empfangenen PANs, d.h. zum Ersetzen eines sicherheitsrelevanten unverschlüsselten Datenstrings in Form der Klartext-PAN durch einen der PAN eindeutig zugeordneten zufälligen Token, entwickelt. Da die Tabellen mit der Zuordnung zwischen den ersetzten PANs und den Token getrennt von den Verarbeitungsprogrammen sicher gespeichert werden, ist es für einen Dritten aufwändig, aus den in der Verarbeitung befindlichen Datensätzen, welche mithilfe der Token pseudonymisiert sind, auf die zugehörigen PANs zurückzuschließen. Eine entsprechende Architektur ist beispielsweise in dem europäischen Patent EP 2 735 991 B1 beschrieben.

Eine zweite mögliche Anwendung eines solchen Verfahrens zum Ersetzen eines sicherheitsrelevanten, unverschlüsselten Datenstrings durch einen Platzhalter ist die verschlüsselte Übertragung eines Datenstrings in einem Datensatz in Form einer Nachricht von einem Sender zu einem Empfänger. Dabei ist beispielsweise der Sender ein Geldautomat, der den Datensatz über ein Datennetz an einen verarbeitenden Sever als Empfänger überträgt. Auch in diesem Beispiel kann eine PAN in der Nachricht durch den Platzhalter ersetzt, dann verschickt und vom Empfänger wieder durch den ursprünglichen Datenstring ersetzt werden. Voraussetzung ist hier, dass Sender und Empfänger beispielsweise durch Austausch eines Schlüssels Kenntnis über den genauen Ablauf des Ersetzungsverfahrens haben. So kann der Sender die PAN verschlüsseln und der Empfänger diese entschlüsseln.

Aus der US 2018/0062832 A1 ist ein Verfahren bekannt mit den Schritten: Empfangen einer Anfrage nach einer Tokenisierung eines Werts von einem Benutzer, wobei die Anfrage einen Sessiontoken umfasst; Dekodieren und Validieren des Sessiontokens; Abrufen einer Tokendefinition, eines Tokenschlüssels und einer Sicherheitsrichtlinie aus einer Datenbank; Hinzufügen des Benutzerschlüssels und des Tokenschlüssels zu dem empfangenen Wert, um einen Eingangswert zu erzeugen; Ersetzen jedes Zeichens des Eingangswerts mit einem bekannten Zeichen, um einen Ersetzungseingangswert zu erzeugen, wobei das bekannte Zeichen in Bezug zu einer Nachschlagetabelle steht; Erzeugen eines Sicherheitshashs aus dem Ersetzungseingangswert, um einen abgeleiteten Schlüssel zu erzeugen; Ersetzen jedes Zeichens des Ersetzungseingangswertes durch ein Zeichen aus Ersetzungstabellen, um einen dritten Eingangswert zu erzeugen, wobei die Ersetzungstabellen ausgewählt werden basierend auf dem empfangenden Wert, der Position des zu ersetzenden Zeichens innerhalb des Ersetzungseingangswertes und des abgeleiteten Schlüssels; und Ausgeben des Eingangswertes an den Benutzer.

Aus der US 2014/0108813 A1 ist zudem ein Datenverarbeitungssystem bekannt, das formaterhaltende Verschlüsselungs- und Entschlüsselungseinrichtungen umfasst. Ein String, der Zeichen enthält, hat ein spezifiziertes Format. Dieses Format definiert einen zulässigen Satz von Zeichenwerten für jede Zeichenposition in dem String. Während Verschlüsselungsoperationen mit der Verschlüsselungseinrichtung wird ein String verarbeitet, um irrelevante Zeichen zu entfernen und den String zu verschlüsseln, wobei ein Index verwendet wird. Der verarbeitete String ist verschlüsselt, wobei eine formatenthaltende Blockverschlüsselung verwendet wird. Die Ausgabe der Blockverschlüsselung wird nachverarbeitet, um einen verschlüsselten String zu erzeugen, der das gleiche spezifizierte Format hat wie der ursprüngliche unverschlüsselte String. Während Entschlüsselungsoperationen verwendet die Entschlüsselungseinrichtung die formaterhaltende Blockverschlüsselung in umgekehrter Form, um den verschlüsselten String in einen entschlüsselten String mit dem gleichen Format umzuwandeln.

Gegenüber den bekannten Verfahren zum Ersetzen eines sicherheitsrelevanten, unverschlüsselten Datenstrings durch einen Platzhalter ist es Aufgabe der vorliegenden Erfindung ein Verfahren bereitzustellen, welches sich durch eine erhöhte Performanz bei vergleichbarer kryptographischer Sicherheit auszeichnet.

Diese Aufgabe wird erfindungsgemäß dadurch gelöst, dass ein computerimplementiertes Verfahren zum Ersetzen eines sicherheitsrelevanten, unverschlüsselten Datenstrings durch einen Platzhalter bereitgestellt wird, wobei das Verfahren die Schritte aufweist: Bereitstellen einer Mehrzahl von voneinander verschiedenen Ersetzungstabellen, wobei in jeder aus der Mehrzahl von Ersetzungstabellen für jedes Zeichen des Alphabets genau ein Ersetzungszeichen aus dem gleichen Alphabet angegeben ist und wobei die Ersetzungszeichen in jeder aus der Mehrzahl von Ersetzungstabellen alle voneinander verschieden sind, Empfangen des sicherheitsrelevanten, unverschlüsselten Datenstrings , wobei der Datenstring aus einer Mehrzahl von Zeichen eines Alphabets gebildet ist, Erzeugen des den unverschlüsselten Datenstring ersetzenden Platzhalters mit den Schritten
1. Auswählen einer Untermenge aus der Mehrzahl von Ersetzungstabellen,
2. Auswählen eines ersten Teilstrings mit mindestens einem Zeichen und eines zweiten Teilstrings mit mindestens einem weiteren Zeichen aus dem Datenstring,
3. Ersetzen des mindestens einen Zeichens des ersten Teilstrings durch ein in einer Ersetzungstabelle aus der Untermenge angegebenes Ersetzungszeichen, wobei das Ersetzungszeichen von dem zweiten Teilstring abhängt,
4. Wiederholen zumindest der Schritte 2 und 3 solange bis alle Zeichen des Datenstrings mindestens zweimal ersetzt wurden,
und Ausgeben des Platzhalters, wobei das Auswählen der Untermenge aus der Mehrzahl von Ersetzungstabellen in Schritt 1 in Abhängigkeit von einem zufälligen Parameter erfolgt und wobei die Auswahl der Untermenge aus der Mehrzahl von Ersetzungstabellen nicht von dem mindestens einen Zeichen des zweiten Teilstrings abhängt.

Mit dem erfindungsgemäßen Verfahren wird ein sicherheitsrelevanter, unverschlüsselter Datenstring durch einen Platzhalter ersetzt, wobei das Ersetzen in dem Sinne formaterhaltend ist, dass der Platzhalter die gleiche Anzahl von Zeichen aufweist wie der Datenstring. Zudem ist der Platzhalter aus Zeichen des gleichen Alphabets gebildet wie der ursprüngliche Datenstring. Dies erleichtert sowohl die Weiterverarbeitung eines Datensatzes mit dem Platzhalter als auch die Erzeugung des Platzhalters selbst. Es versteht sich, dass Gleiches auch für die Entschlüsselung, d.h. das Ersetzen des Platzhalters durch den ursprünglichen, sicherheitsrelevanten, unverschlüsselten Datenstring, gilt.

Die grundlegende Idee des erfindungsgemäßen Ersetzungsverfahrens ist es, die kryptographische Sicherheit dadurch zu erhöhen, dass die Wahl des Ersetzungszeichens, welches ein Zeichen des Datenstrings ersetzt, von mindestens einem weiteren Zeichen des gleichen Datenstrings abhängt. Zu diesem Zweck werden aus dem zu ersetzenden Datenstring zunächst ein erster Teilstring mit mindestens einem zu ersetzenden Zeichen und ein zweiter Teilstring mit mindestens einem weiteren Zeichen ausgewählt. Da ein Angreifer die Zeichen des zu ersetzenden Datenstrings, also insbesondere die Zeichen des zweiten Teilstrings, nicht kennt, kann er auch keine Kenntnis von der Wahl des Ersetzungszeichens haben.

Zusätzlich wird die kryptographische Sicherheit erfindungsgemäß dadurch erhöht, dass jedes Zeichen des Datenstrings mindestens zweimal ersetzt wird.

Im Sinne der vorliegenden Anmeldung bezeichnet eine Ersetzungsrunde oder Runde das Ausführen der Ersetzung eines Zeichens des ersten Teilstrings. Eine Runde weist in einer Ausführungsform mehrere Subrunden auf, wobei in jeder Subrunde das Zeichen erneut ersetzt wird. Dabei wird in der ersten Subrunde des Ersetzens mindestens ein Zeichen des ursprünglichen Datenstrings durch ein Ersetzungszeichen ersetzt und in einer zweiten und in jeder weiteren Subrunde wird das Ersetzungszeichen erneut ersetzt. Als Durchgang im Sinne der vorliegenden Anmeldung wird das Ausführen einer Runde für jedes Zeichen des Datenstrings bezeichnet. Damit umfasst ein vollständiger Durchgang so viele Runden wie der zu ersetzenden Datenstring Zeichen aufweist.

Das mehrfache Ersetzen jedes Zeichens des Datenstrings kann daher in einer Ausführungsform dadurch erfolgen, dass zunächst ein Zeichen des Datenstrings in einer Runde mit mehreren Subrunden mehrfach ersetzt wird, bevor dann das nächste Zeichen ebenfalls in einer Runde mit mehreren Subrunden mehrfach ersetzt wird, usw. bis schließlich das letzte Zeichen des Datenstrings in einer Runde mit mehreren Subrunden mehrfach ersetzt wird. In einer solchen Ausführungsform ist die Anzahl von Ersetzungen durch die Anzahl der Subrunden pro Runde bestimmt.

Alternativ können aber beispielsweise auch in einem ersten Durchgang alle Zeichen des Datenstrings nacheinander jeweils in einer Runde einfach ersetzt werden, bevor in jedem weiteren Durchgang erneut alle Ersetzungszeichen nacheinander ersetzt werden. In einer solchen Ausführungsform ist Anzahl von Ersetzungen eines jeden Zeichens durch die Anzahl der Durchgänge bestimmt.

Sämtliche Kombinationen der zuvor beschriebenen Vorgehensweisen sind denkbar, solange nach dem Abschluss aller Runden jedes Zeichen des Datenstrings mindestens zweimal ersetzt wurde. Insbesondere ist es möglich, die Ersetzung abzubrechen, ohne dass der letzte Durchgang vollständig abgeschlossen wurde.

Eine Abhängigkeit des Ersetzungszeichens für das mindestens eine Zeichen des ersten Teilstrings von dem zweiten Teilstring kann durch eine Reihe von voneinander verschiedenen Maßnahmen, die aber auch miteinander kombiniert werden können, erreicht werden. Stellvertretend werden im nachfolgenden Text zwei mögliche Ausführungsformen erläutert.

Unter einem Datenstring im Sinne der vorliegenden Anmeldung wird jedwede Art von Zeichenfolge verstanden. Ein Datensatz setzt sich aus einem oder mehreren solcher Datenstrings zusammen. Dabei können die Datenstrings in einem Datensatz voneinander abgesetzt oder auf sonstige Weise markiert sein, sie müssen es aber nicht. Insbesondere kann ein Datensatz aus einer einzigen Zeichenfolge bestehen, die eine Mehrzahl von Datenstrings umfasst. Eine Ausgestaltung eines Datensatzes im Sinne der vorliegenden Erfindung ist eine Nachricht, welche den unverschlüsselten Datenstring oder den Platzhalter umfasst.

Ein Datensatz kann in einer Ausführungsform eine eine Finanztransaktion beschreibende Nachricht sein, welche beispielsweise Informationen über Ort, Gegenstand und Preis der Transaktion enthält. In einer solchen Ausführungsform kann der unverschlüsselte Datenstring im Sinne der vorliegenden Anmeldung dann insbesondere zumindest ein Teilstring einer sogenannten Primary Account Number (PAN) sein, d.h. einer ein Konto oder eine Zahlungskarte identifizierenden Ziffernfolge. Jedoch könnte jeder andere Datenstring mit dem gleichen Verfahren durch einen Platzhalter ersetzt und auf diese Weise sicher übertragen und/oder verarbeitet werden.

In einer Ausführungsform der vorliegenden Erfindung erfolgt das Auswählen der Untermenge aus der Mehrzahl von Ersetzungstabellen in Abhängigkeit von dem mindestens einen Zeichen des zweiten Teilstrings, sodass das Ersetzungszeichen für das mindestens eine Zeichen des ersten Teilstrings von mindestens einem Zeichen des zweiten Teilstrings abhängt. Unter der Voraussetzung, dass ein Angreifer nicht weiß, wie der durch den Platzhalter ersetzte unverschlüsselte Datenstring aussah, erhöht die Auswahl der Untermenge aus der Mehrzahl von Ersetzungstabellen, wobei dann eine oder mehrere der Ersetzungstabellen aus der Untermenge für die eigentlichen Ersetzungen verwendet werden, die Sicherheit bei der Erzeugung des Platzhalters.

In einer Ausführungsform der Erfindung sind die zunächst bereitgestellten Ersetzungstabellen jeweils mit einem sie eindeutig bezeichnenden Index versehen. Dann wird mindestens ein Zeichen des zweiten Teilstrings, beispielsweise das erste Zeichen des zweiten Teilstrings, betrachtet, welches den Index der aus der Gesamtmenge auszuwählenden mindestens einen Ersetzungstabelle der Untermenge (mit)bestimmt.

Das Auswählen der Untermenge aus der Mehrzahl von Ersetzungstabellen erfolgt in Abhängigkeit von einem zufälligen Parameter. Ein solcher zufälliger Parameter, von dem die Auswahl der Untermenge abhängt, erhöht die Sicherheit, da die Auswahl der Untermenge dann für zwei identische Datenstrings mit hoher Wahrscheinlichkeit keine zwei identischen Platzhalter erzeugt.

Die Auswahl der Untermenge hängt nicht von dem mindesten einen Zeichen des zweiten Teilstrings ab. Daher beeinflusst ein derartiger Parameter alleine oder im Zusammenwirken mit anderen Parametern als dem mindestens einen Zeichen des zweiten Teilstrings die Auswahl der Untermenge.

Ein Beispiel für die Erzeugung eines derartigen, zufälligen Parameters sind aus der Kryptographie bekannte Konzepte wie Salt und Tweak. Beispielsweise kann aus einem zufälligen Input ein Hash-Wert ermittelt werden, dessen Bytes die Untermenge aus der Mehrzahl von Ersetzungstabellen (mit-)bestimmen. Dazu bildet beispielsweise der Hash-Wert einen Basis-Offset auf die Indizes der Gesamtmenge der Mehrzahl von bereitgestellten Ersetzungstabellen, wobei zu diesem Basis-Offset ein aus dem zweiten Teilstring abgeleiteter Wert Modulo der Gesamtzahl der bereitgestellten Ersetzungstabellen addiert wird.

In einer Ausführungsform wird für jede Ersetzungsrunde ein Basis-Offset in die Gesamtmenge der Ersetzungstabellen ermittelt, so dass die Auswahl der Untermenge nicht nur von dem mindestens einen Zeichen des zweiten Teilstrings, sondern zusätzlich von einem weiteren Parameter abhängt. Dieser Basis-Offset kann beispielsweise durch die Ordnung der Ersetzungsrunde oder durch einen zufälligen Parameter gegeben sein. Zu dem Basis-Offset wird die Position des betrachteten Zeichens des zweiten Teilstrings im Alphabet Modulo der Gesamtzahl der bereitgestellten Ersetzungstabellen addiert. Werden beispielsweise 256 Ersetzungstabellen bereitgestellt, das Alphabet ist das lateinische Alphabet mit 26 Buchstaben, das erste Zeichen des Alphabets hat die Ordnungszahl 0, die ersten drei Zeichen "ABE" des zweiten Teilstrings werden betrachtet und der Basis-Offset ist 50, so führt dies zur Auswahl einer Untermenge mit den drei Tabellen Nr. 50, 51 und 54 aus der Gesamtmenge der bereitgestellten Ersetzungstabellen. Mit diesen drei Ersetzungstabellen der Untermenge könnte das erste Zeichen des ersten Teilstrings dreimal nacheinander ersetzt werden.

In einer weiteren Ausführungsform bestimmen mehrere Zeichen des zweiten Teilstrings gemeinsam durch Addition zu einem Basis-Offset Modulo der Gesamtzahl der bereitgestellten Ersetzungstabellen den Index der ersten Ersetzungstabelle der Untermenge. Für jede weitere Subrunde wird die jeweils nächste Tabelle ausgewählt. Zum Beispiel: Alphabet der Ziffern von 0 bis 9, insgesamt 256 Ersetzungstabellen, die erste Ersetzungstabelle hat die Ordnungszahl 0, der zweite Teilstring hat die ersten drei Zeichen "367", diese werden betrachtet, der Basis-Offset ist 50, dann ist der Index der ersten Ersetzungstabelle der Untermenge (50 + 367) mod 256 = 160, d.h. die Untermenge enthält die Tabellen mit den Indizes 160, 161 und 162 .

In einer Ausführungsform der Erfindung erfolgt das Auswählen der Untermenge aus der Mehrzahl von Ersetzungstabellen in Schritt 1 einmalig bevor alle Zeichen des Datenstrings mehrfach ersetzt werden, d.h. vor der ersten Runde des ersten Durchgangs. In einer Ausführungsform enthält dabei die Untermenge eine Anzahl von Ersetzungstabellen, wobei die Anzahl der Ersetzungstabellen in der Untermenge mindestens gleich der Anzahl der Zeichen des Datenstrings multipliziert mit der Anzahl von Ersetzungen pro Zeichen ist.. Eine derartige Ausführungsform wird beispielsweise dann genutzt, wenn ein kurzer Datenstring mit wenigen Ersetzungsrunden durch den entsprechenden Platzhalter ersetzt wird. Man würde vor dem Ausführen der eigentlichen Ersetzungsrunden die Untermenge aller benötigten Ersetzungstabellen bestimmen.

In einer weiteren Ausführungsform der Erfindung erfolgt das Auswählen der Untermenge aus der Mehrzahl von Ersetzungstabellen in Schritt 1 vor jeder Runde, wobei die Untermenge mindestens eine Ersetzungstabelle aus der Mehrzahl von Ersetzungstabellen enthält. In einer Ausführungsform enthält die Untermenge eine Anzahl von Ersetzungstabellen, die gleich der Anzahl der Subrunden, d.h. der Ersetzungen in der Runde, ist. Auf diese Weise wird für jede Ersetzungsrunde die Untermenge von zu verwendenden Ersetzungstabellen unmittelbar vor dem Ausführen der Ersetzung(en) gewählt.

In einer Ausführungsform der vorliegenden Erfindung enthalten der erste Teilstring und der zweite Teilstring zusammen alle Zeichen des Datenstrings. Enthält der erste Teilstring immer genau ein Zeichen, so enthält dann der zweite Teilstring den Rest aller Zeichen des zu ersetzenden Datenstrings.

Eine weitere Möglichkeit, das Ersetzungszeichen, welches ein Zeichen des ersten Teilstrings ersetzt, von dem zweiten Teilstring abhängig zu machen, wird im Folgenden geschildert. In einer Ausführungsform der Erfindung umfasst das Ersetzen des mindestens einen Zeichens des ersten Teilstrings in Schritt 3 ein Kombinieren des ersten Teilstrings mit dem zweiten Teilstring zu einem Kombinationsstring mit einer Anzahl von Zeichen, die gleich der Anzahl der Zeichen des ersten Teilstrings ist, und ein Ersetzen der Zeichen des Kombinationsstrings mit den in der mindestens einen Ersetzungstabelle angegebenen Ersetzungszeichen.

Anders als in der zuvor beschriebenen Ausführungsform hängt in dieser Ausführungsform nicht die Auswahl der Untermenge von Ersetzungstabellen von dem zweiten Teilstring ab, sondern das mindestens eine Zeichen des ersten Teilstrings wird mit mindestens einem, für einen Angreifer nicht vorhersehbaren Zeichen des zweiten Teilstrings zu einem Kombinationsstring kombiniert, welcher die gleiche Anzahl von Zeichen aufweist wie der erste Teilstring. Dieses Kombinationszeichen hängt naturgemäß von dem zweiten Teilstring ab, sodass auch das jeweilige Ersetzungszeichen für das Kombinationszeichen von diesem zweiten Teilstring abhängig ist.

In einer Ausführungsform der Erfindung werden für das Kombinieren des ersten Teilstrings mit dem zweiten Teilstring zu einem Kombinationsstring die Zeichen des Datenstrings derart codiert, dass die Zeichen des Datenstrings durch eine numerische Kennzeichnung der Position der Zeichen in dem Alphabet repräsentiert werden. Geht man beispielsweise von dem lateinischen Alphabet aus, so würden alle Zeichen "A" durch eine "1" ersetzt und alle Zeichen "B" durch eine "2", usw. Diese Repräsentation der Zeichen des Datenstrings ermöglicht es, die Kombination des ersten Teilstrings mit dem zweiten Teilstring durch eine modulare Verknüpfung zwischen der Position genau eines Zeichens des ersten Teilstrings in dem Alphabet und der Position genau eines Zeichens des zweiten Teilstrings in dem Alphabet auszuführen. Eine derartige modulare Verknüpfung (auch als modulare Operation bezeichnet) ist beispielsweise eine modulare Addition oder eine modulare Multiplikation. Bildlich gesprochen lässt sich die modulare Verknüpfung eines Zeichens aus dem ersten Teilstring und eines Zeichens aus dem zweiten Teilstring als "Rotation" der jeweiligen Ersetzungstabelle in Abhängigkeit von dem Zeichen des zweiten Teilstrings verstehen.

In einer Ausführungsform der Erfindung werden die Positionen des ersten, bereits ersetzten Teilstrings und des zweiten Teilstrings in dem Datenstring nach dem Ersetzen des mindestens einen Zeichens des ersten Teilstrings durch das Ersetzungszeichen getauscht. Auf diese Weise kann eine mehrfache Ersetzung der Zeichen des Datenstrings auf einfache Weise strukturiert erfolgen.

In einer Ausführungsform der vorliegenden Erfindung besteht der erste Teilstring aus genau einem Zeichen. Dabei wird in einer Ausführungsform eine Anzahl von Subrunden der Ersetzung ausgeführt, die gleich der Anzahl von Zeichen in dem zweiten Teilstring ist.

In einer Ausführungsform der Erfindung umfasst das Bereitstellen einer jeden aus der Mehrzahl von Ersetzungstabellen für jedes Zeichen des Alphabets ein zufälliges Auswählen genau eines Ersetzungszeichens aus dem Alphabet mithilfe eines Zufallsgenerators.

In einer Ausführungsform werden für das Bereitstellen der Mehrzahl von Ersetzungstabellen diese zufällig generiert und abgespeichert. Dazu umfasst in einer Ausführungsform das Bereitstellen einer jeden aus der Mehrzahl von Ersetzungstabellen ein Erzeugen der Ersetzungstabelle mithilfe eines Zufallsgenerators. Mit anderen Worten ausgedrückt umfasst das Bereitstellen jeder Ersetzungstabelle in dieser Ausführungsform die Erzeugung einer zufälligen Permutation des Alphabets, wobei die permutierten Zeichen den Zeichen des Alphabets in der ursprünglichen Reihenfolge zugeordnet werden. Zum Beispiel kann eine zufällige Permutation oder Mischung des Alphabets und damit die Ersetzungstabelle mit Hilfe eines Fisher-Yates-Verfahrens (auch al Knuth-Verfahren bekannt) erzeugt werden.

In einer weiteren Ausführungsform der Erfindung umfasst das Bereitstellen einer jeden aus der Mehrzahl von Ersetzungstabellen ein Erzeugen der Ersetzungstabelle mithilfe eines pseudo-zufälligen Stroms von Zahlen, anhand dessen eine Permutation des Alphabets erzeugt wird. Mit anderen Worten ausgedrückt umfasst das Bereitstellen jeder Ersetzungstabelle in dieser Ausführungsform die Erzeugung einer pseudozufälligen Permutation des Alphabets, wobei die permutierten Zeichen den Zeichen des Alphabets in der ursprünglichen Reihenfolge zugeordnet werden.

In einer Ausführungsform für die derartige Generation der Ersetzungstabellen wird der pseudo-zufällige Strom von Zahlen aus einem Schlüssel mit einer Mehrzahl von Zeichen abgeleitet. Beispielsweise kann anhand eines Blockchiffre, wie z.B. AES, aus einem Schlüssel ein Strom von pseudo-zufälligen Zahlen generiert werden, der dann wiederum zur Erzeugung einer Permutation des Alphabets zum Bereitstellen einer Ersetzungstabelle verwendet wird.

In einer Ausführungsform der Erfindung werden für ein Ersetzen des Platzhalters durch den ursprünglichen, sicherheitsrelevanten, unverschlüsselten Datenstring die zum Erzeugen des Platzhalters aus dem unverschlüsselten Datenstring ausgeführten Schritte invertiert.

In einer Ausführungsform des Verfahrens ist der Datenstring Bestandteil eines in einer Verarbeitungseinrichtung zu verarbeitenden Datensatzes, wobei das Ersetzen des Datenstrings durch den Platzhalter in einer Sicherheitseinrichtung erfolgt, wobei das Empfangen des Datenstrings ein Empfangen des Datenstrings in der Sicherheitseinrichtung von der Verarbeitungseinrichtung ist und wobei das Ausgeben des Platzhalters ein Übergeben des Platzhalters von der Sicherheitseinrichtung an die Verarbeitungseinrichtung umfasst.

Eine Verarbeitungseinrichtung im Sinne der vorliegenden Anmeldung ist irgendeine Einrichtung, insbesondere aber ein Programm oder ein Programmabschnitt, welche den Datensatz verarbeitet und in diesem beispielsweise eine Ersetzung des unverschlüsselten Datenstrings durch den Token und umgekehrt durchführt. Eine Verarbeitungseinrichtung in diesem Sinne kann beispielsweise eine Client-Software, aber auch ein Seder zum Übertragen des Datensatzes über ein Datennetz sein.

In einer Ausführungsform ist die Verarbeitungseinrichtung eine Abfangeinrichtung auf einem Datenkanal, welche die Schritte ausführt: Abfangen eines über den Datenkanal in einer ersten Richtung übertragenen Datensatzes, Identifizieren des sicherheitsrelevanten, unverschlüsselten Datenstrings in dem abgefangenen Datensatz, Übergeben des sicherheitsrelevanten, unverschlüsselten Datenstrings an die Sicherheitseinrichtung zum Erzeugen des Platzhalters, Empfangen des Platzhalters von der Sicherheitseinrichtung, Austauschen des unverschlüsselten Datenstrings in dem Datensatz durch den Platzhalter und Weiterleiten des Datensatzes mit dem Platzhalter über den Datenkanal.

Die Idee einer solchen Abfangeinrichtung ist es, den Eingabe-/Ausgabekanal einer weiteren Einrichtung zur Verarbeitung des Datensatzes zu überwachen und ohne Eingriff in die anderen Einrichtungen des Systems in allen Datensätzen, welche unverschlüsselte sicherheitsrelevante Datenstrings enthalten, diese durch Platzhalter zu ersetzten.

Die so von der Abfangeinrichtung pseudonymisierten Datensätze, aus denen der sicherheitsrelevante Datenstring nicht mehr ableitbar ist, werden dann von der weiteren Einrichtung weiterverarbeitet, wobei für diese die Ersetzung des sicherheitsrelevanten unverschlüsselten Datenstrings durch den Platzhalter zu keinerlei Änderung bei der Verarbeitung führt, da der Platzhalter den unverschlüsselten Datenstring formaterhaltend ersetzt.

In einer Ausführungsform der Erfindung ist das zuvor in Ausführungsformen beschriebene computerimplementierte Verfahren ein Tokenisierungsverfahren. Dabei ist die Sicherheitseinrichtung eine Tokenisierungseinrichtung und der Platzhalter ist ein Token. Das Ersetzen des Datenstrings durch den Token erfolgt in der Tokenisierungseinrichtung, wobei der Datenstring von der Verarbeitungseinrichtung empfangen wird und das Ausgeben des Platzhalters umfasst ein Übergeben des Token an die Verarbeitungseinrichtung.

Unter einer Tokenisierungseinrichtung im Sinne der vorliegenden Anmeldung wird eine Einrichtung, insbesondere aber ein Programm oder ein Programmabschnitt verstanden, welche das Erzeugen des Token sowie das Wiederherstellen des unverschlüsselten Datenstrings aus dem Token ausführt.

Insbesondere wird der Datensatz mit dem Token in der weiteren Einrichtung gespeichert. In einem Server für ein bargeldloses Zahlungsverkehrssystem ist die weitere Einrichtung beispielsweise ein Transaktionsdatenspeicher.

Damit Datensätze, die von der weiteren Einrichtung zurück- bzw. ausgegeben werden, wieder mit dem unverschlüsselten Datenstring weiterverarbeitbar sind, führt die Abfangeinrichtung in einer Ausführungsform darüber hinaus die Schritte aus: Abfangen eines über den Datenkanal in einer zweiten Richtung, wobei diese vorzugsweise der ersten Richtung entgegengesetzt ist, Übertragen des Datensatzes, Identifizieren des Token in dem abgefangenen Datensatz, übergeben des Token an die Tokenisierungseinrichtung zum Wiederherstellen des unverschlüsselten Datenstrings, Empfangen des unverschlüsselten Datenstrings von der Tokenisierungseinrichtung, Ersetzen des Token in dem Datensatz durch den unverschlüsselten Datenstring und Weiterleiten des Datensatzes mit dem unverschlüsselten Datenstring über den Datenkanal.

In einer Ausführungsform der Erfindung umfasst das Identifizieren des unverschlüsselten Datenstrings oder des Token in einem Datensatz ein Bestimmen der Länge und der Position des unverschlüsselten Datenstrings oder des Token in dem Datensatz.

In einer weiteren Ausführungsform der Erfindung wird das computerimplementierte Verfahren zum sicheren Speichern eines Datenstrings im Sinne der vorliegenden Anmeldung in einem Server für ein bargeldloses Zahlungsverkehrssystem ausgeführt.

In einer Ausführungsform sieht das Verfahren dabei vor, dass der Token nicht an andere Einrichtungen des Zahlungsverkehrssystems übertragen wird. Benötigen also andere Einrichtungen des Zahlungssystems als der Server den unverschlüsselten Datenstring, d.h. beispielsweise eine PAN, so wird mit Hilfe des erfindungsgemäßen Verfahrens aus dem Token zunächst der unverschlüsselte Datenstring wiederhergestellt und dieser dann übermittelt.

Es sind jedoch andere Ausführungsformen denkbar, bei denen auch die Token selbst an andere Einrichtungen des Zahlungsverkehrssystems übertragen werden können. Falls diese Einrichtungen dann zu einem späteren Zeitpunkt den unverschlüsselten Datenstring für bestimmte Verarbeitungsschritte benötigen, so erfolgt die Wiederherstellung des unverschlüsselten Datenstrings in der Tokenisierungseinrichtung. Die anderen Einrichtungen des Systems übersenden den Token zur Wiederherstellung des unverschlüsselten Datenstrings an die Tokenisierungseinrichtung oder erhalten einen anderweitigen Zugriff auf diese.

In einer weiteren Ausführungsform der Erfindung ist das zuvor in Ausführungsformen beschriebene computerimplementierte Verfahren Teil eines Übertragungsverfahrens zum verschlüsselten Übertragung eines Datenstrings von einem Sender über ein Datennetz zu einem Empfänger. Dabei ist die Sicherheitseinrichtung eine Verschlüsselungseinrichtung und die Verarbeitungseinrichtung ist ein Sender ist, wobei der Sender den Datensatz mit dem Platzhalter über ein Datennetz an einen Empfänger überträgt, wobei der Empfänger den Platzhalter an eine Entschlüsselungseinrichtung übergibt, wobei die Entschlüsselungseinrichtung den Platzhalter von dem Empfänger empfängt, den Platzhalter durch den ursprünglichen, unverschlüsselten Datenstring ersetzt und den Datenstring an den Empfänger übergibt. Es versteht sich, dass in einer solchen Ausführungsform die senderseitige Verschlüsselungseinrichtung und die empfängerseitige Entschlüsselungseinrichtung Kenntnis von einem Schlüssel haben müssen, so wie er in Ausführungsformen und Anwendungen davon zuvor beschrieben wurde.

In einer Ausführungsform ist der Sender ein Bankautomat und der Empfänger ein Autorisierungsserver, beispielsweise der Autorisierungsserver eines Zahlungsverkehrsabwicklers. Dabei ist in einer Ausführungsform der unverschlüsselte Datenstring eine PAN in einem Datensatz, welcher beispielsweise eine Transaktion beschreibt. Der Datensatz bildet dann die vom Sender zum Empfänger über das Datennetz zu übertragende Nachricht. Durch das Ersetzen des ursprünglichen Datenstrings durch den Platzhalter wird der Datensatz pseudonymisiert übertragen und serverseitig muss diese Pseudonymisierung vor der Weiterverarbeitung des Datensatzes wieder aufgehoben werden.

Insoweit die oben beschriebenen Ausführungsformen zumindest teilweise realisiert werden können, wobei eine softwaregesteuerte Datenverarbeitungseinrichtung verwendet wird, ist es offensichtlich, dass ein Computerprogramm, das solch eine Softwaresteuerung bereitstellt und ein Speichermedium, auf welchem solch ein Computerprogramm gespeichert ist, als Aspekte der Erfindung in Betracht zu ziehen sind.

Weitere Vorteile, Merkmale und Anwendungsmöglichkeiten der vorliegenden Erfindung werden anhand der folgenden Beschreibung einer Ausführungsform und der dazugehörigen Figuren deutlich. Es versteht sich, dass die dargestellten Ausführungsformen nicht auf die genauen gezeigten Anordnungen und Funktionalitäten beschränkt sind. Soweit nicht anders angegeben bezeichnen gleiche Bezugszeichen in unterschiedlichen Figuren gleiche oder ähnliche Elemente.
- Figur 1: ist eine schematische Darstellung der Ersetzung der Zeichen eines ersten Teilstrings eines Datenstrings in einer Ersetzungsrunde.
- Figur 2: ist eine schematische Darstellung einer Ersetzungstabelle.
- Figur 3: ist eine schematische Darstellung einer Ausführungsform
- Figur 4: ist eine schematische Darstellung eines Zahlungsverkehrsabwicklungssystems mit einem erfindungsgemäßen Verfahren zum Ersetzen von PANs durch Token.
- Figur 5: ist eine schematische Darstellung eines Systems zur Übertragung von Transaktionsdaten von einem Geldautomaten an einen Server mit einem erfindungsgemäßen Verfahren zum Ersetzen von PANs durch Platzhalter.

Die nachfolgend beschriebene Implementierung des erfindungsgemäßen Verfahrens zum Ersetzen eines sicherheitsrelevanten, unverschlüsselten Datenstrings durch einen Platzhalter kann in verschiedenen Anwendungsszenarien eingesetzt werden. In einer ersten Ausführungsform wird das erfindungsgemäße Verfahren verwendet, um einen Datenstring aus einem Datensatz zu tokenisieren, sodass der zugehörige Datensatz pseudonymisiert weiterverarbeitet werden kann. In einer weiteren Ausführungsform wird das erfindungsgemäße Verfahren dazu verwendet, einen Datenstring in einem Datensatz in Form einer Nachricht vor der Übertragung von einem Sender über ein Datennetz an einen Empfänger durch einen Platzhalter zu verschlüsseln und den Platzhalter beim Empfänger wieder zu entschlüsseln.

Zunächst wird daher nun abstrakt das Verfahren zum Ersetzen des Datenstrings durch den Platzhalter beschrieben, wobei auf die Unterschiede zwischen den Verwendungen zur Tokenisierung und zur Verschlüsselung zur Datenübertragung eines Datenstrings eingegangen wird. Abschließend werden dann die beiden Anwendungsszenarien im Detail beschrieben.

Die Implementierung geht von einem durch den Platzhalter 2 zu ersetzenden Datenstring 1 mit einer Länge von n=8 Zeichen aus. Alle Zeichen des Datenstrings sind einem Ziffernalphabet Ader Größe a=10 entnommen. In dem hier diskutierten Beispiel ist das Alphabet A ein Satz der zehn Ziffern von "0" bis "9", wobei der unverschlüsselte Datanestring der Einfachheit halber "12345678" lautet. Für die interne Darstellung und Verarbeitung jedes Datenstrings wird dieser durch die Repräsentation jedes Zeichens in Form seiner Integer-Position innerhalb des Alphabets umcodiert. Dabei bezeichnet "0" die erste Position und "9" die letzte. In diesem einfachen Beispiel entspricht daher die Repräsentation in Form der Integer-Position der ursprünglichen Repräsentation der Zeichen durch die Zeichen des Alphabets A.

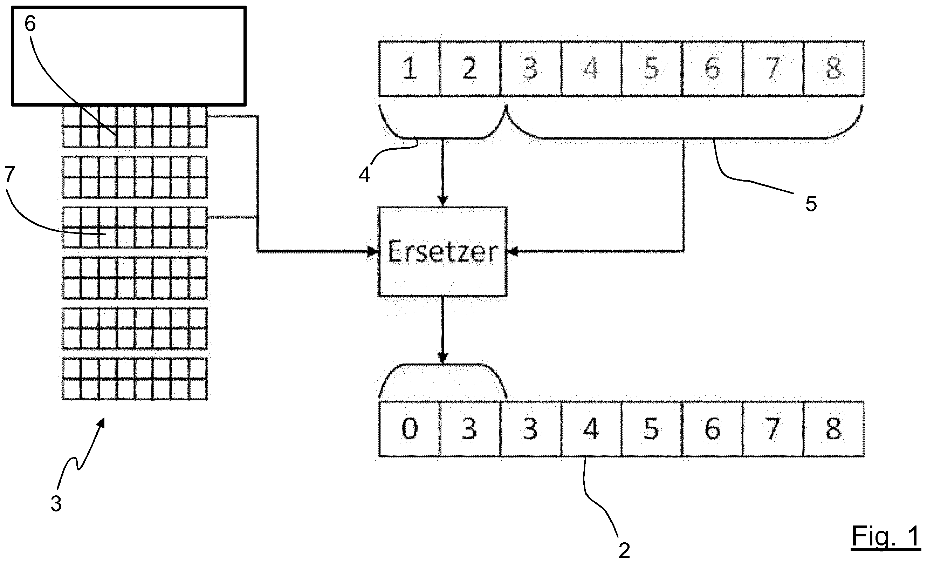

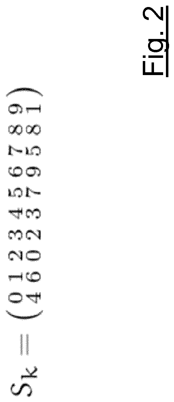

In dem diskutierten Beispiel gemäß Figur 1 wurden vorab sechs Ersetzungstabellen 3 erzeugt. Jede Ersetzungstabelle enthält eine zufällige Permutation des Alphabets A, wobei für jedes Zeichen aus dem Alphabet A des Datenstrings genau ein Zeichen aus dem permutierten Alphabet A angegeben ist. Diese Ersetzungstabelle ist für die Wiederherstellung des Datenstrings aus dem Platzhalter leicht invertierbar. Ein Beispiel für eine solche Ersetzungstabelle 3 ist in Figur 2 schematisch wiedergegeben.

Dient das beschriebene Verfahren der Tokenisierung, so können die Ersetzungstabellen mithilfe eines Zufallsgenerators gebildet und dann als Tokenisierungsgeheimnis in der Tokenisierungseinrichtung gespeichert werden. Wird das aufgezeigte Verfahren hingegen zur Verschlüsselung einer Kommunikation zwischen einem Sender und einem Empfänger verwendet, so werden die Paare von Ersetzungstabellen senderseitig und empfängerseitig zufällig derart aus einem Schlüssel gebildet, dass Sender und Empfänger über die gleichen Ersetzungstabellen bzw. deren Invertierte verfügen.

In der dargestellten Implementierung des erfindungsgemäßen Verfahrens wird der zu ersetzende Datenstring wie bei einem unbalancierten Feistel-Netzwerk in einen ersten Teilstring 4 und einen zweiten Teilstring 5 aufgeteilt. Dabei enthält der erste Teilstring die ersten beiden Zeichen des Datenstrings 1 und der zweite Teilstring 5 enthält alle übrigen Zeichen des Datenstrings.

Zum Ersetzen der Zeichen des Datenstrings 1 werden nun vor jeder Ersetzungsrunde, d.h. vor dem einfachen Ersetzen jedes einzelnen Zeichens des Datenstrings, zwei Ersetzungstabellen 6, 7 als Untermenge aus der Mehrzahl von Ersetzungstabellen 3 ausgewählt. Dabei dient die erste Ersetzungstabelle 6 der Ersetzung des ersten Zeichens des ersten Teilstrings 4 und die zweite Ersetzungstabelle 7 dient der Ersetzung des zweiten Zeichens des ersten Teilstrings 4.

Auch die Auswahl der Untermenge 6, 7 aus der Mehrzahl von Paaren von Ersetzungstabellen 3 erfolgt in Abhängigkeit davon, für welchen Zweck das Verfahren implementiert wird. Bei einer Implementierung für eine Verschlüsselung des Datenstrings 1 zur verschlüsselten Übertragung des Datenstrings von einem Sender über das Datennetz an einen Empfänger wird wieder der Schlüssel zu Grunde gelegt, welcher zuvor die Grundlage für das Bereitstellen der Mehrzahl von Paaren von Ersetzungstabellen war. Bei einer Tokenisierung wird dieser Schlüssel innerhalb der Tokenisierungseinrichtung generiert und als Teil des Tokenisierungsgeheimnisses zusammen mit der Mehrzahl von Ersetzungstabellen 3 gespeichert.

Zur Realisierung einer vollständigen Ersetzung aller Zeichen des Datenstrings werden die Ersetzungszeichen, welche die beiden Zeichen des ersten Teilstrings 4 ersetzen, an das Ende des Datenstrings 1 verschoben, so dass dann zwei weitere Zeichen, im vorliegenden Beispiel die beiden Ziffern "3" und "4", den ersten, zu ersetzenden Teilstring 4 bilden. Alle Ersetzungsoperationen in diesem Durchgang, d.h. bis alle Zeichen erstmals ersetzt wurden, werden mit den beiden ausgewählten Ersetzungstabellen 6, 7 ausgeführt. Vor jedem weiteren Durchgang wird erneut eine Untermenge mit zwei Ersetzungstabellen aus der Mehrzahl von Ersetzungstabellen 3 ausgewählt.

In allen hier diskutierten Ausführungsformen hängt jedes Ersetzungszeichen, welches ein Zeichen des ersten Teilstrings 4 ersetzt von dem zweiten Teilstring 5 ab. Auf diese Weise hängt das Ergebnis der Ersetzungsoperation von etwas ab, was ein Angreifer nicht kennen kann.

In einer Variante wird der zweite Teilstring 5 für die Auswahl der Untermenge aus der Mehrzahl von Ersetzungstabellen verwendet. Dazu sind alle bereitgestellten Ersetzungstabellen 3 jeweils mit einem eindeutigen Index versehen, d.h. die Ersetzungstabellen 3 sind durchnummeriert, wobei die erste Tabelle mit 0 bezeichnet ist. In der beschriebenen Variante wird die Ordnung des jeweiligen Durchgangs als Basis-Offset in die Gesamtmenge der Tabellen verwendet. D.h. ein Zähler wird für jeden Durchgang um eins raufgesetzt. Der Basis-Offset beträgt folglich in der ersten Runde 0, in der zweiten Runde 1, in der 50. Runde 49 usw. Zu diesem Basis-Offset wird die Position des betrachteten Zeichens des zweiten Teilstrings im Alphabet Modulo der Gesamtzahl der bereitgestellten Ersetzungstabellen addiert. Dabei ist wieder die erste Position des Alphabets mit 0 bezeichnet. In dem betrachteten Beispiel wurden sechs Ersetzungstabellen 3 bereitgestellt und das ZiffernAlphabet hat neun Zeichen. Im ersten Durchgang führt dies zur Auswahl der Tabelle mit der Ordnungsnummer 3 (= 0+3 mod 6) aus der Gesamtmenge der bereitgestellten Ersetzungstabellen 3, in dem zweiten Durchgang zur Auswahl der Tabelle mit der Ordnungsnummer 5 (= 1+4 mod 6) im dritten Durchgang zur Auswahl der Tabelle mit der Ordnungsnummer 1 (= 2+5 mod 6).

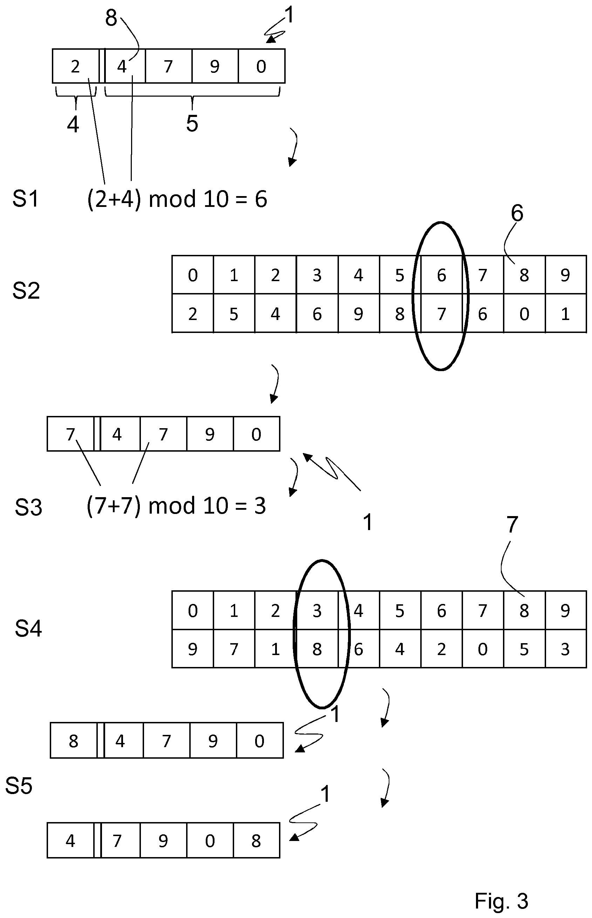

In einer weiteren, nun mit Bezug auf Figur 3 beschriebenen Variante wird das genau eine zu ersetzende Zeichen des ersten Teilstrings 4 mehrfach ersetzt, bevor das nächste und danach jedes weitere Zeichen des Datenstrings 1 zweifach ersetzt wird. Im Sinne der vorliegenden Anmeldung hat in dieser Variante jede Runde der Ersetzung zwei Subrunden. Gezeigt ist in Figur 3 davon beispielhaft die zweifache Ersetzung des ersten Zeichens des Datenstrings 1. Der Datenstring 1 besteht aus 5 Zeichen des Alphabets A der Ziffern "0" bis "9", nämlich "23790". Für die Ersetzungsoperationen wird eine Darstellung der Zeichen verwendet, die ihrer Integer-Position im Alphabet entspricht. Die Integer-Positionen der Zeichen im Alphabet beginnt mit der Ordnungszahl 0.

Vor dem Beginn jeder Runde, d.h. vor dem zweifachen Ersetzen eines jeden Zeichens, wird aus der Menge der bereitgestellten Ersetzungstabellen (in Figur 3 nicht gezeigt) eine Untermenge mit einer Anzahl von Ersetzungstabellen ausgewählt, die gleich der Anzahl der Subrunden ist. Im vorliegenden Fall werden daher für die Ersetzung jedes Zeichens jeweils zwei Ersetzungstabellen 6, 7 ausgewählt. Auch in diesen Ersetzungstabellen 6, 7 sind die Zeichen in Form ihre Integer-Position im Alphabet A codiert.

Nun wird in Schritt S1 das eine Zeichen des ersten Teilstrings 4 modular zu dem ersten Zeichen 8 des zweiten Teilstrings 5 addiert, um ein Kombinationszeichen zu bilden. Das Kombinationszeichen ist folglich in dem gewählten Beispiel (2+4) mod 10 = 6. Das Kombinationszeichen wird sodann mit Hilfe der ersten Ersetzungstabelle 6 in Schritt S2 ersetzt. Das in der Ersetzungstabelle 6 für das Zeichen an der Position 6 des Alphabets angegebene Ersetzungszeichen ist "7". Dieses ersetzt die "2" im im ersten Teilstring 4 des Datenstrings 1. Nun wird in den Schritten S3 und S4 das Zeichen des ersten Teilstrings 4 noch einmal ersetzt, dieses Mal unter Verwendung der zweiten Ersetzungstabelle 7 aus der Untermenge. Zur Bildung des Ersetzungszeichens wird in der zweiten Subrunde das Zeichen des ersten Teilstrings 4 modular zum zweiten Zeichen des zweiten Teilstrings 5 addiert.

Da nun das erste Zeichen des Datenstrings zweifach ersetzt wurde, wird dieses ersetzte erste Zeichen in Schritt S5 an das Ende des Datenstrings 1 verschoben und das nächste Zeichen des Strings bildet das Zeichen des ersten Teilstrings 4 und wird zweifach ersetzt, so wie es zuvor für die Schritte S1 bis S4 beschrieben wurde.

In einer Variante könnte jedes Zeichen in einer Runde insgesamt viermal ersetzt werden (vier Subrunden), wobei das Kombinationszeichen nacheinander mit allen vier Zeichen des zweiten Teilstrings gebildet wird.

Durch die modulare Addition des Zeichens des ersten Teilstrings 4 mit jeweils einem Zeichen des zweiten Teilstrings 5 hängt nun nicht mehr die Auswahl der für die Ersetzung verwendeten Ersetzungstabellen 6, 7 aus der Mehrzahl 3 von Ersetzungstabellen von dem zweiten Teilstring 5 ab. Stattdessen hängen aber die konkreten Ersetzungszeichen, welche das jeweilige Zeichen des ersten Teilstrings 4 ersetzen in dieser Variante unmittelbar von den ersten beiden Zeichen des zweiten Teilstrings 5 ab.

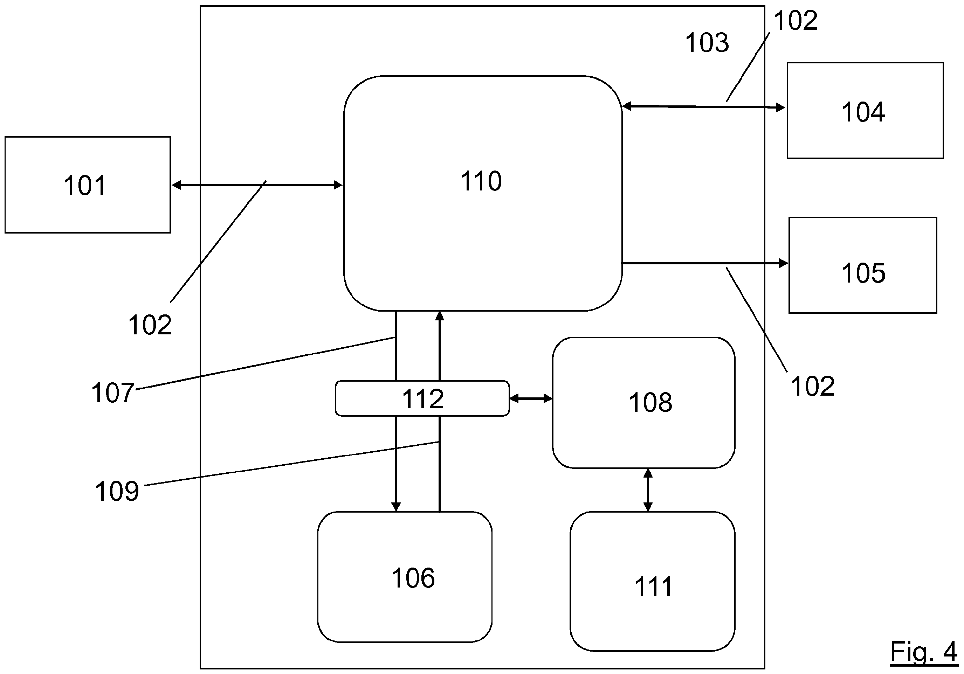

Figur 4 zeigt eine schematische Darstellung eines Zahlungsverkehrsabwicklungssystems, in welchem das erfindungsgemäße computerimplementierte Verfahren zum Ersetzen eines sicherheitsrelevanten, unverschlüsselten Datenstrings zum Einsatz kommt.

Das gezeigte Zahlungsverkehrsabwicklungssystem besteht aus einer Mehrzahl von Kassensystemen 101, von denen eines in Figur 4 dargestellt ist. Über eine Netzwerkverbindung 102 ist das Kassensystem 101 mit einem zentralen Server 103 verbunden. Dieser wiederum ist über Netzwerkverbindungen 102 sowohl mit Kreditkartenanbietern 104 als auch mit dem oder den eigentlichen Zahlungsausgleichssystemen 105 verbunden.

Der Server weist in der gezeigten Ausführungsform eine zentrale Verarbeitungseinheit 110, eine Abfangeinrichtung 112, einen Transaktionsdatenspeicher 106, eine Tokenisierungseinrichtung 108 sowie einen Tresor 111 für das Tokenisierungsgeheimnis auf.

Von den Kassensystemen 101 empfängt der Server 103 über die Netzwerkverbindung 102 Informationen über die zu tätigende Transaktion. Diese Informationen umfassen insbesondere die (Kredit-) Kartennummer des Käufers sowie Angaben zum Preis, dem Abwicklungszeitpunkt des Kaufs und Ähnlichem. Dabei liegen die Informationen über eine Transaktion in Form einer Nachricht vor, welche über die Netzwerkverbindungen 102 von und zu dem Server 103 übertragen wird. Eine solche Nachricht ist ein Datensatz im Sinne der vorliegenden Anmeldung. Die Informationen über die getätigte Transaktion können zum einen von der zentralen Verarbeitungseinheit 110 auf dem Server 103 unmittelbar, d.h. ohne Zwischenspeicherung, an den Kreditkartengeber 104 oder das Zahlungsausgleichssystem 105 weitergeleitet werden. Dabei erfolgt die Weiterleitung aus Sicht des auf dem Server 103 implementierten Systems im Klartext, d.h. unverschlüsselt. Dies bedeutet jedoch nur, dass für diese Übermittlung der Server 103 selbst keine Verschlüsselung vornimmt. Vielmehr werden die Kanäle 102 von und zu dem Server 103 durch für diese proprietäre Systeme geschützt. Beispielsweise sind die Netzwerke 102 als VPN-Kanäle ausgestaltet.

Aufgabe der auf dem Server 103 implementierten zentralen Verarbeitungseinheit 110 ist es, aufgrund seiner hohen Verfügbarkeit die Transaktionsinformationen zu verarbeiten und gegebenenfalls solange zu speichern, bis auch die korrespondierenden Einrichtungen der Kreditkartengeber 104 und der Systeme 105 wieder verfügbar sind. Zudem erfolgt üblicherweise eine Speicherung der Transaktionsinformationen zur späteren Abwicklung von Reklamationen sowie zur kumulierten Weiterleitung an die Zahlungsausgleichssysteme 105.

Um eine größtmögliche Sicherheit der Transaktionsdaten bei der Handhabung im Server 103 zu gewährleisten, werden sämtliche in den Transaktionsdaten enthaltenen PANs, welche hier die unverschlüsselten Datenstrings im Sinne der vorliegenden Anmeldung bilden, vor der Speicherung der Daten in dem Transaktionsdatenspeicher 6 durch Token als Ersetzungszeichen ersetzt. Dazu wird der Eingangspfad 107 in den Transaktionsdatenspeicher 106 ebenso wie der Ausgangsdatenpfad 109 aus dem Transaktionsdatenspeicher 106 von der Abfangeinrichtung 112 (diese ist eine Verarbeitungseinrichtung im Sinne der vorliegenden Anmeldung) überwacht. Der Transaktionsdatenspeicher 106 bildet eine weitere Einrichtung zum Verarbeiten des Datensatzes im Sinne der vorliegenden Anmeldung.

Alle zu speichernden Datensätze auf dem Eingangsdatenpfad 107, welche eine PAN, d.h. einen sicherheitsrelevanten unverschlüsselten Datenstring, enthalten, werden von der Abfangeinrichtung 112 abgefangen. Der Datensatz wird analysiert und der darin enthaltene unverschlüsselte Datenstring wird an die Tokenisierungseinrichtung 108 (auch als Tokenisierungs-Engine bezeichnet) übergeben. Von der Tokenisierungseinrichtung 108 wird der unverschlüsselte Datenstring empfangen und durch einen Token ersetzt. Der Token wird dann wieder an die Abfangeinrichtung übergeben. Die Abfangeinrichtung ersetzt danach in dem abgefangenen Datensatz den unverschlüsselten Datenstring durch den Token und gibt den so veränderten sicheren Datensatz an den Transaktionsdatenspeicher 106 zum Speichern des Datensatzes aus.

Soll umgekehrt ein Datensatz aus dem Transaktionsdatenspeicher 6 ausgelesen und an die zentrale Verarbeitungseinheit 10 bereitgestellt werden, so muss zunächst der Token des in dem Transaktionsdatenspeicher gespeicherten Datensatzes wieder durch den unverschlüsselten Datenstring ersetzt werden.

Dazu werden alle aus dem Transaktionsdatenspeicher ausgelesenen Datensätze auf dem Ausgangsdatenpfad 109 von der Abfangeinrichtung 112 abgefangen. Der Datensatz wird analysiert und der darin enthaltene Token wird an die Tokenisierungseinrichtung 108 übergeben. Von der Tokenisierungseinrichtung 108 wird der Token empfangen und wieder durch den zugehörigen unverschlüsselten Datenstring ersetzt. Der unverschlüsselte Datenstring wird dann wieder an die Abfangeinrichtung 112 übergeben. Die Abfangeinrichtung 112 ersetzt danach in dem aus dem Transaktionsdatenspeicher 106 ausgelesenen und abgefangenen Datensatz den Token durch den unverschlüsselten Datenstring und gibt den so veränderten Datensatz an die zentrale Verarbeitungseinheit 110 zur Weiterverarbeitung des Datensatzes aus. Eine solche Weiterverarbeitung umfasst insbesondere ein Routen einer Nachricht mit dem Datensatz an einen Kartenanbieter 104 oder ein Zahlungsausgleichsystem 105.

Als vorteilhaft bei dieser Architektur erweist es sich, dass in dem Transaktionsdatenspeicher 106 die PANs zu den einzelnen Transaktionen nicht im Klartext vorliegen, sondern durch Token ersetzt sind. Ein Angriff auf den Transaktionsdatenspeicher 106 liefert also niemals die Informationen über die PANs, sodass ein solcher Angriff wirkungslos bleibt. Um eine größtmögliche Sicherheit zu gewährleisten, sind die eigentliche Tokenisierungseinrichtung 108 und die für Ersetzungen verwendeten Ersetzungstabellen, die in dem sogenannten Tresor 111 verwahrt werden, getrennt voneinander implementiert.

In der Tokenisierungseinrichtung 8 wird die oben beschriebene Ausführungsform des Ersetzungsverfahrens ausgeführt.

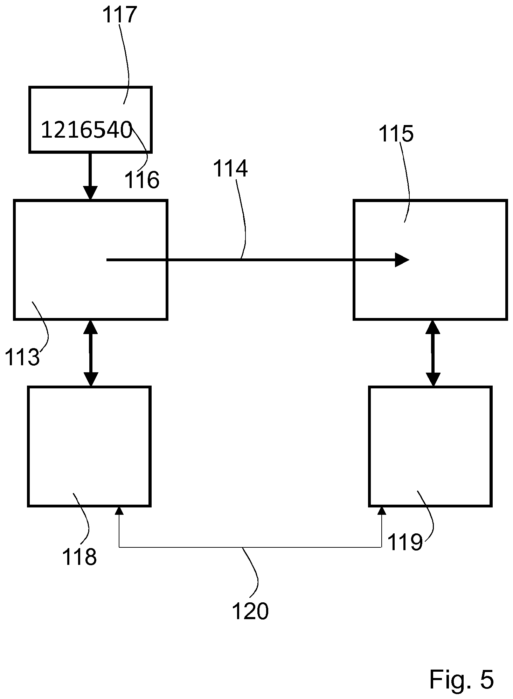

Figur 5 zeigt eine schematische Darstellung eines Systems zur sicheren Übertragung von Transaktionsdaten von einem Bankautomaten 113 als Sender über ein Datennetz 114 an einen Autorisierungsserver 115 eines Zahlungsverkehrsabwicklers. In dem System kommt das erfindungsgemäße computerimplementierte Verfahren zum Ersetzen eines sicherheitsrelevanten, unverschlüsselten Datenstrings in Form einer Kartennummer 116 einer Kreditkarte 117 zum Einsatz. Als Nachricht wird ein Datensatz, welcher eine Transaktion beschreibt und die Kartennummer 116 enthält, über das Datennetz 114 übertragen. Um die Transaktion während der Übertragung zu pseudonymisieren und damit gegenüber einem Angriff von außen zu schützen, wird die Kartennummer an eine Verschlüsselungseinrichtung 118 übergeben und dort durch einen Platzhalter ersetzt. Im Server 115 wird die Pseudonymisierung wieder aufgehoben. Dafür wird der Platzhalter an eine Entschlüsselungseinrichtung 119 übergeben, durch die ursprüngliche Kartennummer 116 ersetzt und dann der Datensatz mit der unverschlüsselten Kartennummer weiterverarbeitet. Voraussetzung für die erfolgreiche Entschlüsselung ist der Austausch 120 eines Schlüssels, auf welchem sowohl die Ersetzung der ursprünglichen Kartennummer 116 in der Verschlüsselungseinrichtung 118 durch den Platzhalter als auch die Ersetzung des Platzhalters durch die ursprüngliche Kartennummer 116 in der Entschlüsselungseinrichtung 119 beruht.

## Patentansprüche

1. Computerimplementiertes Verfahren zum Ersetzen eines sicherheitsrelevanten, unverschlüsselten Datenstrings durch einen Platzhalter mit den Schritten Bereitstellen einer Mehrzahl von voneinander verschiedenen Ersetzungstabellen, wobei in jeder aus der Mehrzahl von Ersetzungstabellen für jedes Zeichen des Alphabets genau ein Ersetzungszeichen aus dem gleichen Alphabet angegeben ist und wobei die Ersetzungszeichen in jeder aus der Mehrzahl von Ersetzungstabellen alle voneinander verschieden sind,
Empfangen des sicherheitsrelevanten, unverschlüsselten Datenstrings, wobei der Datenstring aus einer Mehrzahl von Zeichen eines Alphabets gebildet ist,
Erzeugen des den unverschlüsselten Datenstring ersetzenden Platzhalters mit den Schritten
1. Auswählen einer Untermenge aus der Mehrzahl von Ersetzungstabellen,
2. Auswählen eines ersten Teilstrings mit mindestens einem Zeichen und eines zweiten Teilstrings mit mindestens einem weiteren Zeichen aus dem Datenstring,
3. Ersetzen des mindestens einen Zeichens des ersten Teilstrings durch ein in einer Ersetzungstabelle aus der Untermenge angegebenes Ersetzungszeichen, wobei das Ersetzungszeichen von dem zweiten Teilstring abhängt,
4. Wiederholen zumindest der Schritte 2 und 3 solange bis alle Zeichen des Datenstrings mindestens zweimal ersetzt wurden und
Ausgeben des Platzhalters,
wobei das Auswählen der Untermenge aus der Mehrzahl von Ersetzungstabellen in Schritt 1 in Abhängigkeit von einem zufälligen Parameter erfolgt, das Verfahren **dadurch gekennzeichnet dass** die Auswahl der Untermenge aus der Mehrzahl von Ersetzungstabellen nicht von dem mindesten einen Zeichen des zweiten Teilstrings abhängt.

2. Computerimplementiertes Verfahren nach einem der vorhergehenden Ansprüche, **dadurch gekennzeichnet, dass** das Auswählen der Untermenge aus der Mehrzahl von Ersetzungstabellen in Schritt 1 vor jeder Ausführung der Schritte 2 und 3 erfolgt, wobei die Untermenge mindestens eine Ersetzungstabelle aus der Mehrzahl von Ersetzungstabellen enthält.

3. Computerimplementiertes Verfahren nach einem der vorhergehenden Ansprüche, **dadurch gekennzeichnet, dass** der erste Teilstring und der zweite Teilstring zusammen alle Zeichen des Datenstrings enthalten.

4. Computerimplementiertes Verfahren nach einem der vorhergehenden Ansprüche, **dadurch gekennzeichnet, dass** das Ersetzen des mindestens einen Zeichens des ersten Teilstrings in Schritt 3 umfasst
Kombinieren des ersten Teilstrings mit dem zweiten Teilstring zu einem Kombinationsstring mit einer Anzahl von Zeichen, die gleich der Anzahl der Zeichen des ersten Teilstrings ist, und
Ersetzen der Zeichen des Kombinationsstrings mit den in der mindestens einen Ersetzungstabelle der Untermenge angegebenen Ersetzungszeichen.

5. Computerimplementiertes Verfahren nach dem vorhergehenden Anspruch, **dadurch gekennzeichnet, dass** die Zeichen des Datenstrings derart codiert werden, dass die Zeichen des Datenstrings durch eine numerische Kennzeichnung der Position der Zeichen in dem Alphabet repräsentiert werden.

6. Computerimplementiertes Verfahren nach dem vorhergehenden Anspruch, **dadurch gekennzeichnet, dass** das Kombinieren des ersten Teilstrings mit dem zweiten Teilstring eine modulare Verknüpfung zwischen der Position genau eines Zeichens des ersten Teilstrings in dem Alphabet und der Position genau eines Zeichens des zweiten Teilstrings in dem Alphabet umfasst.

7. Computerimplementiertes Verfahren nach einem der vorhergehenden Ansprüche, **dadurch gekennzeichnet, dass** nach dem Ersetzen der Zeichen des ersten Teilstrings durch die Ersetzungszeichen die Positionen des ersten bereits ersetzten Teilstrings und des zweiten Teilstrings in dem Datenstring getauscht werden.

8. Computerimplementiertes Verfahren nach einem der vorhergehenden Ansprüche, **dadurch gekennzeichnet, dass** der erste Teilstring aus genau einem Zeichen besteht.

9. Computerimplementiertes Verfahren nach einem der vorhergehenden Ansprüche, **dadurch gekennzeichnet, dass** das Bereitstellen einer jeden aus der Mehrzahl von Ersetzungstabellen ein Erzeugen der Ersetzungstabelle mithilfe eines Zufallsgenerators umfasst.

10. Computerimplementiertes Verfahren nach einem der vorhergehenden Ansprüche, **dadurch gekennzeichnet, dass** das Bereitstellen einer jeden aus der Mehrzahl von Ersetzungstabellen ein Erzeugen der Ersetzungstabelle pseudo-zufälligen Stroms von Zahlen umfasst, anhand derer eine Permutation des Alphabets erzeugt wird.

11. Computerimplementiertes Verfahren nach dem vorhergehenden Anspruch, **dadurch gekennzeichnet, dass** der pseudo-zufällige Strom von Zahlen aus einem Schlüssel mit einer Mehrzahl von Zeichen abgeleitet wird.

12. Computerimplementiertes Verfahren nach einem der vorhergehenden Ansprüche, **dadurch gekennzeichnet, dass** für ein Ersetzen des Platzhalters durch den sicherheitsrelevanten, unverschlüsselten Datenstring die zum Erzeugen des Platzhalters aus dem unverschlüsselten Datenstring ausgeführten Schritte invertiert werden.

13. Computerimplementiertes Verfahren nach einem der vorhergehenden Ansprüche, **dadurch gekennzeichnet, dass** der Datenstring Bestandteil eines in einer Verarbeitungseinrichtung zu verarbeitenden Datensatzes ist, wobei das Ersetzen des Datenstrings durch den Platzhalter in einer Sicherheitseinrichtung erfolgt, wobei das Empfangen des Datenstrings ein Empfangen des Datenstrings in der Sicherheitseinrichtung von der Verarbeitungseinrichtung ist und wobei das Ausgeben des Platzhalters ein Übergeben des Platzhalters von der Sicherheitseinrichtung an die Verarbeitungseinrichtung umfasst.

14. Computerimplementiertes Verfahren nach Anspruch 13, **dadurch gekennzeichnet, dass** die Sicherheitseinrichtung eine Tokenisierungseinrichtung ist und der Platzhalter ein Token ist.

15. Computerimplementiertes Verfahren nach Anspruch 13, **dadurch gekennzeichnet, dass** die Sicherheitseinrichtung eine Verschlüsselungseinrichtung ist und die Verarbeitungseinrichtung ein Sender ist, wobei der Sender den Datensatz mit dem Platzhalter über ein Datennetz an einen Empfänger überträgt, wobei der Empfänger den Platzhalter an eine Entschlüsselungseinrichtung übergibt, wobei die Entschlüsselungseinrichtung den Platzhalter von dem Empfänger empfängt, den Platzhalter durch den Datenstring ersetzt und den Datenstring an den Empfänger übergibt.

## Claims

1. A computer-implemented method of replacing a security-relevant unencrypted data string by a placeholder, comprising the steps:
providing a plurality of mutually different replacement tables, wherein specified in each of the plurality of replacement tables for each character of the alphabet is precisely one replacement character from the same alphabet and wherein the replacement characters in each of the plurality of replacement tables are all different from each other,
receiving the security-relevant unencrypted data string, wherein the data string is formed from a plurality of characters of an alphabet,
generating the placeholder replacing the unencrypted data string, with the steps
1. selecting a subset from the plurality of replacement tables,
2. selecting a first substring with at least one character and a second substring with at least one further character from the data string,
3. replacing the at least one character of the first substring by a replacement character specified in a replacement table from the subset, wherein the replacement character depends on the second substring,
4. repeating at least steps 2 and 3 until all characters of the data string were replaced at least twice,
outputting the placeholder,
wherein selecting the subset from the plurality of replacement tables in step 1 is effected in dependence on a random parameter,
wherein the method is **characterised in that** selecting the subset from the plurality of replacement tables is not dependent on the at least one character of the second substring.

2. The computer-implemented method according to one of the preceding claims **characterised in that** selection of the subset from the plurality of replacement tables in step 1 is effected before each performance of steps 2 and 3, wherein the subset contains at least one replacement table from the plurality of replacement tables.

3. The computer-implemented method according to one of the preceding claims **characterised in that** the first substring and the second substring together contain all characters of the data string.

4. The computer-implemented method according to one of the preceding claims **characterised in that** replacement of the at least one character of the first substring in step 3 includes:
combining the first substring with the second substring to give a combination substring having a number of characters, that is equal to the number of characters of the first substring, and
replacing the characters of the combination string with the replacement characters specified in the at least one replacement table of the subset.

5. The computer-implemented method according to the preceding claim **characterised in that** the characters of the data string are so encoded that the characters of the data string are represented by a numerical identification of the position of the characters in the alphabet.

6. The computer-implemented method according to the preceding claim **characterised in that** combining the first substring with the second substring includes a modular linkage between the position precisely of one character of the first substring in the alphabet and the position precisely of one character of the second substring in the alphabet.

7. The computer-implemented method according to one of the preceding claims **characterised in that** after replacement of the characters of the first substring by the replacement characters the positions of the first already replaced substring and the second substring are exchanged in the data string.

8. The computer-implemented method according to one of the preceding claims **characterised in that** the first substring consists of precisely one character.

9. The computer-implemented method according to one of the preceding claims **characterised in that** the provision of each one from the plurality of replacement tables includes generation of the replacement table by means of a random generator.

10. The computer-implemented method according to one of the preceding claims **characterised in that** the provision of each one from the plurality of replacement tables includes generation of the replacement table by means of a pseudo-random stream of numbers, on the basis of which a permutation of the alphabet is generated.

11. The computer-implemented method according to the preceding claim **characterised in that** the pseudo-random stream of numbers is derived from a key with a plurality of characters.

12. The computer-implemented method according to one of the preceding claims **characterised in that** for replacement of the placeholder by a security-relevant unencrypted data string the steps performed for generating the placeholder from the unencrypted data string are inverted.

13. The computer-implemented method according to one of the preceding claims **characterised in that** the data string is a constituent part of a data set to be processed in a processing apparatus, wherein replacement of the data string by the placeholder is effected in a security device, wherein reception of the data string is reception of the data string in the security device from the processing apparatus and wherein the output of the placeholder includes transfer of the placeholder from the security device to the processing apparatus.

14. The computer-implemented method according to claim 13 **characterised in that** the security device is a tokenisation device and the placeholder is a token.

15. The computer-implemented method according to claim 13 **characterised in that** the security device is an encryption device and the processing apparatus is a sender, wherein the sender transmits the data set with the placeholder by way of a data network to a receiver, wherein the receiver transfers the placeholder to a decryption device, wherein the decryption device receives a placeholder from the receiver, replaces the placeholder by the data string and transfers the data string to the receiver.

## Revendications

1. Procédé implémenté par ordinateur, permettant de remplacer par un substitut une chaîne de données non cryptée liée à la sécurité, comprenant les étapes consistant à :
fournir une pluralité de tables de substitution différentes les unes des autres, dans chacune parmi la pluralité de tables de substitution et pour chaque caractère de l'alphabet, exactement un caractère de substitution du même alphabet étant indiqué et les caractères de substitution étant tous différents les uns des autres dans chacune parmi la pluralité de tables de substitution,
recevoir la chaîne de données non cryptée liée à la sécurité, la chaîne de données étant formée d'une pluralité de caractères d'un alphabet,
générer le substitut remplaçant la chaîne de données non cryptée grâce aux étapes consistant à :
1. sélectionner un sous-ensemble de la pluralité de tables de substitution,
2. sélectionner une première chaîne partielle avec au moins un caractère et une seconde chaîne partielle avec au moins un autre caractère, à partir de la chaîne de données,
3. remplacer ledit au moins un caractère de la première chaîne partielle par un caractère de substitution indiqué dans une table de substitution issue du sous-ensemble, le caractère de substitution dépendant de la seconde chaîne partielle,
4. répéter au moins les étapes 2 et 3 jusqu'à ce que tous les caractères de la chaîne de données aient été remplacés au moins deux fois et
fournir le substitut,
la sélection du sous-ensemble de la pluralité de tables de substitution à l'étape 1 s'effectuant en fonction d'un paramètre aléatoire,
le procédé étant **caractérisé en ce que**
la sélection du sous-ensemble de la pluralité de tables de substitution ne dépend pas dudit au moins un caractère de la seconde chaîne partielle.

2. Procédé implémenté par ordinateur selon l'une quelconque des revendications précédentes, **caractérisé en ce que** la sélection du sous-ensemble de la pluralité de tables de substitution à l'étape 1 a lieu avant chaque mise en oeuvre des étapes 2 et 3, le sous-ensemble contenant au moins une table de substitution issue de la pluralité de tables de substitution.

3. Procédé implémenté par ordinateur selon l'une quelconque des revendications précédentes, **caractérisé en ce que** la première chaîne partielle et la seconde chaîne partielle contiennent ensemble tous les caractères de la chaîne de données.

4. Procédé implémenté par ordinateur selon l'une quelconque des revendications précédentes, **caractérisé en ce que** la substitution dudit au moins un caractère de la première chaîne partielle à l'étape 3 comprend les étapes consistant à :
combiner la première chaîne partielle avec la seconde chaîne partielle pour former une chaîne combinée comprenant un nombre de caractères égal au nombre de caractères de la première chaîne partielle, et
remplacer les caractères de la chaîne combinée par les caractères de substitution spécifiés dans ladite au moins une table de substitution du sous-ensemble.

5. Procédé implémenté par ordinateur selon la revendication précédente, **caractérisé en ce que** les caractères de la chaîne de données sont codés de telle manière que les caractères de la chaîne de données sont représentés par une identification numérique de la position des caractères dans l'alphabet.

6. Procédé implémenté par ordinateur selon la revendication précédente, **caractérisé en ce que** la combinaison de la première chaîne partielle avec la seconde chaîne partielle comprend une liaison modulaire entre la position exacte d'un caractère de la première chaîne partielle au sein de l'alphabet et la position exacte d'un caractère de la seconde chaîne partielle au sein de l'alphabet.

7. Procédé implémenté par ordinateur selon l'une quelconque des revendications précédentes, **caractérisé en ce que**, après le remplacement des caractères de la première chaîne partielle par les caractères de substitution, les positions de la première chaîne partielle déjà substituée et de la seconde chaîne partielle sont échangées dans la chaîne de données.

8. Procédé implémenté par ordinateur selon l'une quelconque des revendications précédentes, **caractérisé en ce que** la première chaîne partielle est constitué d'exactement un caractère.

9. Procédé implémenté par ordinateur selon l'une quelconque des revendications précédentes, **caractérisé en ce que** la fourniture de chacune parmi la pluralité de tables de substitution comprend la génération de la table de substitution à l'aide d'un générateur aléatoire.

10. Procédé implémenté par ordinateur selon l'une quelconque des revendications précédentes, **caractérisé en ce que** la fourniture de chacune parmi la pluralité de tables de substitution comprend la génération de la table de substitution d'un flux pseudo-aléatoire de nombres à l'aide de laquelle une permutation de l'alphabet est générée.

11. Procédé implémenté par ordinateur selon la revendication précédente, **caractérisé en ce que** le flux pseudo-aléatoire de nombres est dérivé d'une clé comprenant une pluralité de caractères.

12. Procédé implémenté par ordinateur selon l'une quelconque des revendications précédentes, **caractérisé en ce que**, pour un remplacement du substitut par la chaîne de données non cryptée liée à la sécurité, les étapes mises en oeuvre pour générer le substitut à partir de la chaîne de données non cryptée sont inversées.

13. Procédé implémenté par ordinateur selon l'une quelconque des revendications précédentes, **caractérisé en ce que** la chaîne de données fait partie d'un jeu de données à traiter dans un dispositif de traitement, le remplacement de la chaîne de données par le substitut ayant lieu dans un dispositif de sécurité, la réception de la chaîne de données étant une réception de la chaîne de données dans le dispositif de sécurité par le dispositif de traitement et la fourniture du substitut comprenant un transfert du substitut du dispositif de sécurité vers le dispositif de traitement.

14. Procédé implémenté par ordinateur selon la revendication 13, **caractérisé en ce que** le dispositif de sécurité est un dispositif de tokenisation et le substitut est un token.

15. Procédé implémenté par ordinateur selon la revendication 13, **caractérisé en ce que** le dispositif de sécurité est un dispositif de cryptage et le dispositif de traitement est un émetteur, l'émetteur transmettant le jeu de données comprenant le substitut à un récepteur par l'intermédiaire d'un réseau de données, le récepteur transmettant le substitut à un dispositif de décryptage, le dispositif de décryptage recevant le substitut en provenance du récepteur, remplaçant le substitut par la chaîne de données et transmettant la chaîne de données au récepteur.
